# EUROPEAN PATENT APPLICATION

(11) **EP 4 583 480 A1**
(43) Date of publication of application: **09.07.2025**
(21) Application number: 23869869.0
(22) Date of filing: 30.06.2023
(51) Int. Cl.: H04L 41/0273

(54) **SERVICE ACCESS METHOD, TERMINAL DEVICE, SERVER, AND ROUTING NODE**

(30) Priority: 27.09.2022 CN 202211183096
(71) Applicant: ZTE CORPORATION, Shenzhen, Guangdong 518057 (CN)
(72) Inventor: JIANG, Zhihong, Shenzhen, Guangdong 518057 (CN); YAN, Xincheng, Shenzhen, Guangdong 518057 (CN); ZHOU, Na, Shenzhen, Guangdong 518057 (CN); JI, Hongwei, Shenzhen, Guangdong 518057 (CN); SONG, Lin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/105102
(87) International publication number: WO 2024/066621

(57) **Abstract**

Provided in the present application are a service access method, a terminal device, a server, and a routing node. The solution comprises: a service authorization server receiving a service authorization request, which is sent by a terminal device, for a target application; on the basis of an access regulation and control policy, which is locally configured for the target application, the service authorization server determining whether to allow the terminal device to perform service access on the target application; after service authorization verification is passed, the service authorization server configuring, for the terminal device, a service authorization certificate and a time limit of the service authorization certificate, such that the terminal device sends, to a routing node, a service access request for the target application, wherein the service access request carries the service authorization certificate and the time limit, and the service authorization certificate and the time limit are used by the routing node to perform service authorization credibility verification; and after the service authorization credibility verification is passed, forwarding the service access request to an application server of the target application.

## Description

### CROSS-REFERENCE TO RELATED APPLICATIONS

The present application claims priority to Chinese Patent Application No. 202211183096.0, filed to the China Patent Office on September 27, 2022 and entitled "SERVICE ACCESS METHOD, TERMINAL DEVICE, SERVER, AND ROUTING NODE", the entire content of which is incorporated herein by reference.

### TECHNICAL FIELD

The present application relates to the technical field of Internet communications, in particular to a service access method, a terminal device, a server, and a routing node.

### BACKGROUND

At present, during a process that a terminal device initiates service access to an application server, the terminal device sends a data message without considering a receiving capability of an opposite end, meanwhile, a network side does not perform validity verification on the access of the terminal device, which results in that a large quantity of service accesses are requested to the application server, then not only is network congestion prone to occurring, but also invalid service accesses may occupy processing resources of the application-end server, and finally, service performance of the application server is affected.

For providing service-side protection for the application server, there is an urgent need for a finer service access control solution at present.

### SUMMARY

Objectives of the present application are to provide a service access method, a terminal device, a server, and a routing node, which can perform fine service access control over the terminal device, so as to avoid occurrence of network congestion and influence on service performance of the application server caused by a fact that a large quantity of service accesses are directly requested to an application server.

To achieve the above objectives, embodiments of the present application are implemented as follows.

In a first aspect, a service access method is provided, applied to a terminal device, including: sending a service authorization request for a target application to a service authorization server, wherein the service authorization server determines, according to a local access regulation and control policy configured for the target application, whether to allow the terminal device to perform service access on the target application, and in response to that the terminal device is allowed to perform the service access on the target application, the service authorization server configures a service authorization certificate and a time limit of the service authorization certificate for the terminal device; receiving a service authorization response, wherein the service authorization response carries the service authorization certificate and the time limit of the service authorization certificate which are configured by the service authorization server; and sending a service access request for the target application to a routing node, wherein the service access request carries the service authorization certificate and the time limit, and the service authorization certificate and the time limit are used by the routing node for performing service authorization credibility verification, and the service access request is forwarded to an application server of the target application in response to that the service authorization credibility verification is passed.

In a second aspect, a service access method is provided, applied to a service authorization server, including: receiving a service authorization request for a target application sent by a terminal device; determining, according to a local access regulation and control policy configured for the target application, whether to allow the terminal device to perform service access on the target application; and configuring a service authorization certificate and a time limit of the service authorization certificate for the terminal device in a case that the terminal device is allowed to perform the service access on the target application, such that the terminal device sends a service access request for the target application to a routing node, wherein the service access request carries the service authorization certificate and the time limit, and the service authorization certificate and the time limit are used by the routing node for performing service authorization credibility verification, and the service access request is forwarded to an application server of the target application in response to that the service authorization credibility verification is passed.

In a third aspect, a service access method is provided, applied to a routing node, including: receiving a service access request sent by a terminal device, wherein the service access request carries a service authorization certificate and a time limit of the service authorization certificate, and the service authorization certificate and the time limit are configured for the terminal device by a service authorization server; performing service authorization credibility verification based on the service authorization certificate and the time limit in the service access request; and forwarding the service access request to an application server of a target application in a case that the service authorization credibility verification is passed, such that the application server establishes a service connection for the terminal device.

In a fourth aspect, a terminal device is provided, including: a request sending module, configured to send a service authorization request for a target application to a service authorization server, wherein the service authorization server determines, according to a local access regulation and control policy configured for the target application, whether to allow the terminal device to perform service access on the target application, and the service authorization server configures a service authorization certificate and a time limit of the service authorization certificate for the terminal device in response to that the terminal device is allowed to perform the service access on the target application; a response receiving module, configured to receive a service authorization response, wherein the service authorization response carries the service authorization certificate and the time limit of the service authorization certificate which are configured by the service authorization server after service authorization verification is passed; and an access initiating module, configured to send a service access request for the target application to a routing node, wherein the service access request carries the service authorization certificate and the time limit, and the service authorization certificate and the time limit are used by the routing node for performing service authorization credibility verification, and the service access request is forwarded to an application server of the target application in response to that the service authorization credibility verification is passed.

In a fifth aspect, a service authorization server is provided, including: an authorization request receiving module, configured to receive a service authorization request for a target application sent by a terminal device; an authorization request decision module, configured to determine whether to allow the terminal device to perform service access on the target application according an access regulation and control policy and a current resource state for the target application; and an authorization request performing module, configured to configure a service authorization certificate and a time limit of the service authorization certificate for the terminal device in a case that the terminal device is allowed to perform the service access on the target application, such that the terminal device sends a service access request for the target application to a routing node, wherein the service access request carries the service authorization certificate and the time limit, and the service authorization certificate and the time limit are used by the routing node for performing service authorization credibility verification, and the service access request is forwarded to an application server of the target application in response to that the service authorization credibility verification is passed.

In a sixth aspect, a routing node is provided, including: an access receiving module, configured to receive a service access request sent by a terminal device, wherein the service access request carries a service authorization certificate and a time limit of the service authorization certificate, and the service authorization certificate and the time limit are configured by a service authorization server after service authorization verification is performed based on a service authorization request sent by a terminal and the service authorization verification is passed; an authorization verification module, configured to perform service authorization credibility verification according to the service authorization certificate and the time limit in the service access request; and an access processing module, configured to forward the service access request to an application server of a target application in a case that the service authorization credibility verification is passed, such that the application server establishes a service connection for the terminal device.

In a seventh aspect, embodiments of the present application provide an electronic device, including: a processor; and a memory configured to store a computer-executable instruction, wherein the computer-executable instruction, when executed, enables the processor to perform the method described in any one of the first aspect, the second aspect and the third aspect.

In an eighth aspect, a computer-readable storage medium is provided, wherein the computer-readable storage medium is used for storing a computer-executable instruction, and the computer-executable instruction, when executed by a processor, implements the method described in any one of the first aspect, the second aspect and the third aspect.

### BRIEF DESCRIPTION OF DRAWING(S)

In order to more clearly describe technical solutions in embodiments of the present application or in the related art, accompanying drawings needed by the descriptions in the embodiments or the prior art will be briefly introduced below. Apparently, the accompanying drawings in the following descriptions are only some embodiments recorded in the embodiments of the present application. Those ordinarily skilled in the art may also obtain other accompanying drawings according to these accompanying drawings without making creative work.
FIG. 1 is a schematic architecture diagram of a service access method provided by embodiments of the present application.
FIG. 2 is a schematic flowchart of a service access method provided by embodiments of the present application.
FIG. 3 is a schematic flowchart of a service access method for an application scenario 1 provided by embodiments of the present application.
FIG. 4 is a schematic flowchart of a service access method for an application scenario 2 provided by embodiments of the present application.
FIG. 5 is a schematic flowchart of a service access method for an application scenario 3 provided by embodiments of the present application.
FIG. 6 is a schematic flowchart of a service access method for an application scenario 4 provided by embodiments of the present application.
FIG. 7 is a schematic flowchart of a service access method for an application scenario 5 provided by embodiments of the present application.
FIG. 8 is a schematic flowchart of a service access method for an application scenario 6 provided by embodiments of the present application.
FIG. 9 is a schematic flowchart of a service access method for an application scenario 7 provided by embodiments of the present application.
FIG. 10 is a schematic flowchart of a service access method for an application scenario 8 provided by embodiments of the present application.
FIG. 11 is a schematic flowchart of a service access method for an application scenario 9 provided by embodiments of the present application.
FIG. 12 is a schematic flowchart of a service access method for an application scenario 10 provided by embodiments of the present application.
FIG. 13 is a schematic flowchart of a service access method for an application scenario 11 provided by embodiments of the present application.
FIG. 14 is a schematic structural diagram of a terminal device provided by embodiments of the present application.
FIG. 15 is a schematic structural diagram of a service authorization server provided by embodiments of the present application.
FIG. 16 is a schematic structural diagram of a routing node provided by embodiments of the present application.
FIG. 17 is a schematic structural diagram of an electronic device provided by embodiments of the present application.

### DETAILED DESCRIPTION

In order to make those skilled in the art better understand technical solutions in the present specification, the technical solutions in embodiments of the present application will be described clearly and completely below with reference to accompanying drawings in the embodiments of the present application. Apparently, the described embodiments are merely some embodiments but not all embodiments of the present specification. All other embodiments obtained by those ordinarily skilled in the art based on the embodiments of the present specification without making creative efforts should fall within the scope of protection of the present specification.

As described above, during a process that a terminal device initiates service access to an application server, the terminal device sends a data message without considering a receiving capability of an opposite end, meanwhile, a network side does not perform validity verification on the access of the terminal device, which results in that a large quantity of service accesses are requested to the application server, then not only is network congestion prone to occurring, but also invalid service accesses may occupy processing resources of the application server, and finally, service performance of the application-end server is affected.

For providing a service-side protection for the application server, the present application is intended to provide a service access solution, which can perform fine service access control over the terminal device and thus prevent a large quantity of service accesses from being directly requested to the application server.

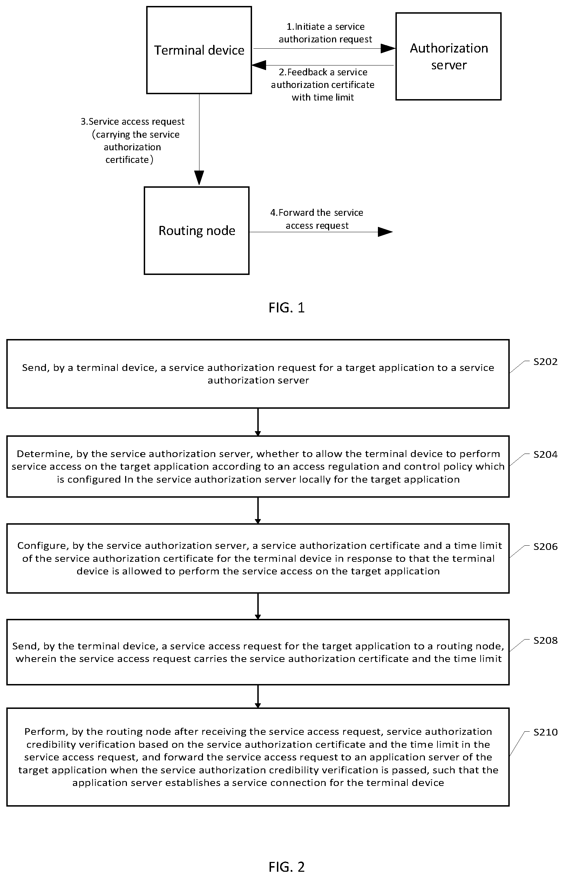

FIG. 1 is a schematic diagram of a scenario of a service access solution in embodiments of the present application, which mainly includes: a terminal device, a service authorization server and a routing node. The terminal device, before initiating a service access request for a target application, needs to initiate a service authorization request to the service authorization server of a network side, such that the service authorization server decides, according to a local access regulation and control policy configured for the target application, whether to allow the terminal device to perform service access on the target application, so that network congestion caused by high concurrency of service accesses is avoided by regulating and controlling the service accesses. Then, if the service authorization server allows the terminal device to initiate the service access, the service authorization server configures a service access authorization certificate with a time limit for the terminal device, such that the terminal device initiates the service access request for the target application by means of the service access authorization certificate within the time limit. During a transmission process of the service access request, the routing node through which the service access request may perform service authorization credibility verification on the service access authorization certificate and the time limit provided by the terminal device, and forward the service access request to the application server of the target application only when the service authorization credibility verification is passed, and finally the application server establishes a service connection for the terminal device. Apparently, the solution of the embodiment of the present application can perform fine control over the service access according to a receiving capability of a network side and credibility of a terminal device side, so as to prevent a large quantity of service accesses from being directly requested to the application server and thus not to affect the service performance of the application server.

Based on an architecture of a scenario shown in FIG. 1, embodiments of the present application provides a service access method. FIG. 2 is a schematic flowchart of a service access method. The method specifically includes the following steps.

At S202, a terminal device sends a service authorization request for a target application to a service authorization server.

In the present application, the terminal device cannot initiate service access to the target application without service authorization by the service authorization server. In some cases, a gateway node is arranged in a link between the terminal device and the service authorization server, the terminal device needs to provide its own identity validity certificate for the gateway node, and then the gateway node can forward the service authorization request to the service authorization server.

Here, an identity authorization server deployed in this application is responsible for providing an identity authorization certificate of the identity validity certificate for the terminal device. That is, the terminal device, before sending the service authorization request, needs to send an identity authorization request to the identity authorization server, and the identity authorization request carries identity authorization authentication information provided by the terminal device, such as a device ID of the terminal device and a user ID of the terminal device. The identity authorization server, after receiving the identity authorization request, performs identity authorization verification on the identity authorization authentication information provided by the terminal device based on an identity verification logic configured therein. If the identity authorization verification is passed, the identity authorization server configures the identity authorization certificate for the terminal device, so as to prove that the terminal device passes the identity verification on an identity authorization server side; and meanwhile, the identity authorization server may also send to the gateway node an identity authorization verification factor which is used for performing the identity authorization credibility verification on the identity authorization certificate.

Correspondingly, the terminal device needs to carry the identity authorization certificate in the service authorization request, and after the service authorization request passes through the gateway node, the gateway node performs the identity authorization credibility verification on the identity authorization certificate in the service authorization request based on the identity authorization verification factor. If the identity authorization credibility verification is passed, that is, it is judged that the identity authorization certificate is true, the gateway node forwards the service authorization request to the service authorization server. If the identity authorization credibility verification is not passed, that is, it is judged that the identity authorization certificate is false, the gateway node refuses to forward the service authorization request to the service authorization server, so the terminal device whose identity is unidentified is intercepted on a gateway node side in a service authorization stage, and control over the service access is implemented to a certain degree.

It needs to be noted that the above gateway node may refer to any gateway node in the link between the terminal device and a service authorization server, such as, an access gateway node on a terminal device side and a service gateway node on a service authorization server side, which is not specifically limited here.

Besides, in actual application, the identity authorization certificate in the present application may be issued to the terminal device after the identity authorization server signs the identity authorization certificate based on a local key; and correspondingly, the identity authorization verification factor may be a key used for verifying signature of the identity authorization server. When the gateway node verifies, based on the identity authorization verification factor, that the signature of the identity authorization certificate provided by the terminal device belongs to the identity authorization server, it indicates that the identity authorization credibility verification is passed.

At S204, the service authorization server determines, according to a local access regulation and control policy configured for the target application, whether to allow the terminal device to perform service access on the target application.

In this step, the service authorization server may decide and determine whether to allow the terminal device to perform the service access on the target application according to credit information (such as a reject rate of the service access and service violation record) of the terminal device, state information (such as a location, a device type and a system version) of the terminal device, a preset service access control list (such as a service access frequency and the number of times of service accesses) and a service resource occupation condition (such as a CPU proportion, a memory proportion and a link congestion condition of the application server).

Here, taking whether to allow the terminal device to perform the service access on the target application is decided according to the service resource occupation condition as an example, the service authorization server obtains a service resource occupation state of the application server of the target application regularly, the service authorization server, after receiving the service authorization request of the terminal device, determines whether the application server can support the service access of the terminal device according to a latest service resource occupation state of the application server; if the service resource occupation state indicates that the application server is in a high load state (for example, the CPU proportion and the memory proportion do not reach corresponding warning proportion thresholds), it is judged that the application server cannot support the service access of the terminal device at present, the service authorization request of the terminal device is further rejected; and likewise, if the service resource occupation state indicates that the application server is in a low load state, it is judged that the application server can support the service access of the terminal device at present, and service authorization verification of the following step is further performed.

At S206, the service authorization server configures a service authorization certificate and a time limit of the service authorization certificate for the terminal device in response to that the terminal device is allowed to perform the service access on the target application.

In the present application, the service authorization server, after receiving the service authorization request, performs the service authorization verification on the terminal device based on an internal service layer logic, such as performing verification on a service IP, a source IP, an application ID, a source ID and other information, allows the terminal device to perform the service access on the target application in response to that the service authorization credibility verification is passed, and then configures the service authorization certificate and the time limit of the service authorization certificate for the terminal device, wherein the service authorization certificate is used for representing that the terminal device passes the service authorization verification of the service authorization server.

Several implementations of configuring the service authorization certificate and the time limit by the service authorization server are exemplarily introduced below.

### First implementation

In the first implementation, the terminal device sends the service authorization request to a service gateway node through a routing node, and then the service gateway node forwards the service authorization request to the service authorization server.

Firstly, the terminal device adds a service identification of this service access into the service authorization request and sends the service authorization request to the service gateway node, and the service identification may be, but is not limited to a service ID, a service uniform resource identifier (URI) and the like, which is not specifically limited herein.

After the routing node receives the service authorization request, a service authorization verification factor is generated based on a local key as well as a source IP of the service authorization request, and the service authorization verification factor and corresponding generation time are added into the service authorization request so as to be sent to the service gateway node. In the present application, the service authorization verification factor is used for generating the service authorization certificate, and meanwhile also used for performing the service authorization credibility verification on the service authorization certificate.

After the service gateway node receives the service authorization request, a corresponding service IP is mapped out based on the service identification in the service authorization request, and the service authorization verification factor in the service authorization request is updated (a updating mode may be substituting a service IP into the service authorization verification factor for hash coding) according to the service IP, so that a business of this service access is correlated with the service authorization verification factor, and thus the subsequently generated service authorization certificate is valid only for the business of this service access. Correspondingly, the service authorization server, after receiving the service authorization request, configures the time limit for the terminal device by using the generation time of the service authorization verification factor in the service authorization request as a reference basis. Afterwards, the service authorization server configures the service authorization certificate with a time effect for the terminal device according to the time limit and the service authorization verification factor.

For example, if the generation time of the service authorization verification factor is 7 a.m., and a validity duration of authorization of a target service is 1 hour, the time limit of the service authorization certificate is 8 a.m., and after the service authorization certificate is configured for the terminal device, the terminal device may initiate a service access request related to the above service IP by using the service authorization certificate before 8 a.m.; and if it is beyond 8 a.m., the terminal device needs to obtain a new service authorization certificate from the service server again based on the above process.

In the above first implementation, if the terminal device can directly provide the service IP, that is, the service gateway node does not need to map the service IP, the terminal device may add the service IP into the service authorization request and then send the service authorization request. Correspondingly, the service authorization server updates the service authorization verification factor based on the service IP in the service authorization request, so as to complete binding of the service authorization verification factor and the service IP; or, if the terminal device can directly provide the service IP, after the routing node receives the service authorization request, the service authorization verification factor is generated based on the local key, and the source IP and the service IP of the service authorization request, that is, binding of the service authorization verification factor and the service IP is completed on a routing node side, and the service authorization server does not need to update the service authorization verification factor according to the service IP subsequently after receiving the service authorization request.

Besides, if there are a plurality of routing nodes in a link from the terminal device to the application server, only the routing node which first receives the service authorization request needs to add a generation time of its own service authorization verification factor into the service authorization request; and correspondingly, the service authorization server determines the time limit of the service authorization certificate by using the generation time provided by the routing node which first receives the service authorization request.

Here, the present application may set a preset indication field in the service authorization request, so as to indicate whether the service authorization request is already forwarded by another routing node in the process of being sent to the service authorization server.

For the routing node, after the service authorization request is received, whether the service authorization request is already forwarded by another routing node is determined first based on the preset indication field of the service authorization request.

If NO, it indicates that the local is the routing node which first receives the service authorization request, the preset indication field of the service access request needs to be set as a field value used for indicating that the service access request is already forwarded by another routing node, and a local service authorization verification factor and the corresponding generation time are added into the service authorization request to be sent to the service gateway node.

If YES, it indicates that the local is not the routing node which first receives the service authorization request, the generation time is already added into the service authorization request, and the locally generated service authorization verification factor is added into the service authorization request to be sent to the service gateway node.

### Second implementation

Different from the above first implementation, in the second implementation, the terminal device directly sends the service authorization request to the service authorization server through an access gateway node, and the service authorization server performs service authorization verification; if the service authorization verification is passed, the service authorization server sends the service authorization request to the routing node, so as to further forward the service authorization request to the application server through the routing node, and the application server configures the service authorization certificate and the time limit on the premise that the service authorization server passes the service authorization verification.

After the service authorization verification is passed, the service authorization server determines a validity duration of authorization according to the local access regulation and control policy and adds the validity duration of authorization into the service authorization request to send the service authorization request to the routing node.

Correspondingly, after the routing node receives the service authorization request, a service authorization verification factor is generated based on a local key, the source IP of the service authorization request and the validity duration of authorization of the service authorization request, and the service authorization verification factor is added into the service authorization request to be sent to the application server.

Referring to the first implementation here, based on this, if the terminal device provides the service IP in the service authorization request, the routing node may further generate the service authorization verification factor based on the service IP, add the service authorization verification factor into the service authorization request and then directly send the service authorization request to the application server; if the terminal device provides the service identification such as the service ID and the service URI in the service authorization request, the routing node needs to send the service authorization request to the service gateway node, the service gateway node maps out the corresponding service IP based on the service identification, and updates the service authorization verification factor in the service authorization request according to the service IP, and after updating is completed, the service gateway node sends the service authorization request to the application server.

The application server, after receiving the service authorization request, configures the service authorization certificate for the terminal device according to the service authorization verification factor already bound to the service IP in the service authorization request. Meanwhile, the application server may also configure the time limit of the service authorization certificate for the terminal device according to the validity duration of authorization in the service authorization request.

### Third implementation

Different from the above first implementation, in the third implementation, the service authorization server replaces the service authorization verification factor by a symmetric encryption algorithm or an asymmetric encryption algorithm to generate the service authorization certificate.

That is, the service authorization server, after receiving the service authorization request, first determines the time limit based on local time and preset validity duration of authorization and then encodes the time limit, the source ID and the service IP of the service authorization request and other parameters based on its own key or digital certificate so as to obtain the service authorization certificate.

The service IP may be provided by the terminal device for the service authorization server in the service authorization request; or the terminal device provides the service identification in the service authorization request, the service gateway node maps out the corresponding service IP based on the service identification, and then the service IP is added into the service authorization request to be provided for the service authorization server.

At S208, the terminal device sends a service access request for the target application to the routing node, wherein the service access request carries the service authorization certificate and the time limit.

In the present application, if the service authorization server locally configures the service authorization certificate and the time limit for the terminal device, the service authorization certificate and the time limit are packaged in a service authorization response by the service authorization server and sent to the terminal device; and if the service authorization server configures the service authorization certificate and the time limit for the terminal device through the application server of the target application, the service authorization certificate and the time limit are packaged in the service authorization response by the application server and sent to the terminal device.

At S210, the routing node, after receiving the service access request, performs service authorization credibility verification based on the service authorization certificate and the time limit in the service access request, and forwards the service access request to the application server of the target application when the service authorization credibility verification is passed, such that the application server establishes a service connection for the terminal device.

With reference to the above description, if the service authorization certificate is generated by the service authorization server or the application server on the basis of the service authorization verification factor, the routing node generates a reference service authorization certificate based on a local service authorization verification factor and the time limit in the service access request and compares the reference service authorization certificate with the service authorization certificate in the service access request, so as to complete the service authorization credibility verification. If the reference service authorization certificate is consistent with the service authorization certificate in the service access request, it indicates that the service authorization certificate and the time limit provided in the service access request are true; and in a case that both the service authorization certificate and the time limit are true, if current time does not exceed the time limit, it is judged that the service authorization credibility verification is passed, and the routing node forwards the service access request to the application server of the target application.

In addition, if the service authorization certificate is generated by the service authorization server on the basis of the symmetric encryption algorithm or the asymmetric encryption algorithm, the routing node prestores a key or a digital certificate of the service authorization server. The routing node, after receiving the service access request, decrypts the service authorization certificate in the service access request based on the key or the digital certificate provided by the service authorization server to obtain a time limit, a source ID (IP) and a service IP; then the routing node performs the service authorization credibility verification on the time limit, and the source ID (IP) and the service IP of the service authorization request obtained by decryption, for example, confirming whether the local time exceeds the time limit obtained by decryption and determining whether the source ID and the service IP of the service authorization request are consistent with the source ID (IP) and the service IP obtained by decryption; and if the source ID and the service IP of the service authorization request are consistent with the source ID (IP) and the service IP obtained by decryption, it is judged that the service authorization credibility verification is passed, and the routing node forwards the service access request to the application server of the target application.

Embodiments of the service access method of the present application in different application scenarios are introduced below in detail.

### First application scenario

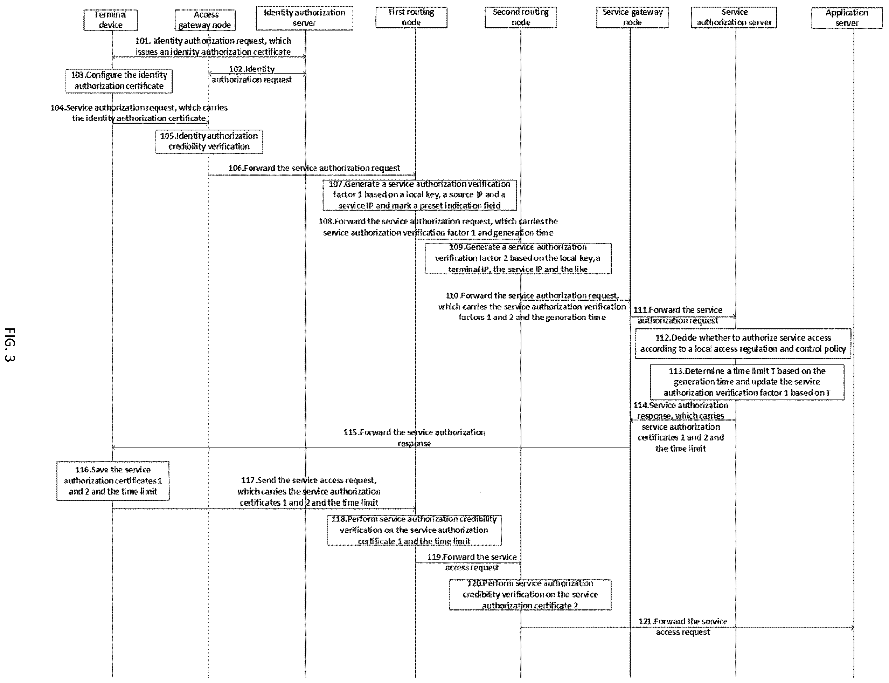

As shown in FIG. 3, the first application scenario includes the terminal device, the access gateway node, the identity authorization server, a first routing node, a second routing node, the service gateway node, the service authorization server and the application server. Corresponding process includes the following steps.

At steps 101-102, the terminal device initiates an identity authorization request (carrying identity authorization authentication information) to the identity authorization server. After the identity authorization verification is passed, the identity authorization server generates a related identity authorization certificate for the terminal device and issues an identity authorization verification factor to the access gateway node.

At steps 103-106, the terminal device performs preprocessing configuration on the identity authorization certificate according to an identity ID and carries the identity authorization certificate and a service IP in the service authorization request to be sent to the access gateway node. The access gateway node performs the identity authorization credibility verification on the identity authorization certificate according to the identity authorization verification factor. After the identity authorization credibility verification is passed, the service authorization request is forwarded to the first routing node.

At steps 107-108, the first routing node, after receiving the service authorization request, generates a service authorization verification factor 1 based on a local key, a terminal IP and a service IP and adds the service authorization verification factor 1 into the service authorization request; meanwhile, the first routing node determines according to a flag bit of a preset indication field that the local one is a routing node which first receives the service authorization request, and adds generation time of the service authorization verification factor 1 to the service authorization request; and then the first routing node marks that the preset indication field indicates being already forwarded by the routing node and sends the service authorization request to the second routing node.

At steps 109-110, the second routing node, after receiving the service authorization request, generates a service authorization verification factor 2 based on a local key, a source IP and a service IP and adds the service authorization verification factor 2 into the service authorization request; and meanwhile, the second routing node judges according to the present indication field of the service authorization request that the present node does not need to add generation time, and then directly sends the service authorization request to the service gateway node.

At step 111, the service gateway node judges according to a message type of the request that the request is a service authorization request, and then forwards the service authorization request to the authorization server.

At steps 112-114, the service authorization server decides whether to authorize this service access according to the local access regulation and control policy; for example, whether to authorize is determined according to credit information of the terminal device, current state information of a terminal, a preset service access control list and a service resource occupation condition. After determining to authorize the service access, the authorization server calculates a time limit T of this authorization based on generation time carried in a message and a locally preset period-of-validity duration and updates the service authorization verification factor 1 based on the time limit T; and then the authorization server obtains corresponding service authorization certificates 1 and 2 based on configuration of the service authorization verification factors 1 and 2 and packages the service authorization certificates 1 and 2 and the time limit T in the service authorization response to be sent to the service gateway node.

At steps 115-116, the service gateway node forwards the service authorization response (including the service IP) to the terminal, and the terminal device saves the service authorization certificates 1 and 2 and the time limit therein after receiving the service authorization response.

At steps 117-121, the terminal device starts to access to a service, and initiates a service access request to the first routing node, wherein the service access request carries the service authorization certificates 1 and 2 and the time limit T.

The first routing node, after receiving the service access request, judges according to the preset indication field that the local one is a routing node which first receives the service access request, at the moment, service authorization credibility verification is performed on the service authorization certificate 1 and the time limit T carried in the service access request according to the local service authorization verification factor 1, a verification object includes verifying authenticity of the service authorization certificate 1 and the time limit T and verifying whether the local current time is less than the time limit T; and if the service authorization credibility verification is passed, the service access request continues to be forwarded to the second routing node. Besides, if the current time exceeds the time limit, the first routing node may inform the terminal device of reapplying for service access authorization.

The second routing node, after receiving the service access request, judges according to the preset indication field of the service access request that the local one is not the routing node which first receives the service access request, at the moment, service authorization credibility verification is performed on the service authorization certificate 2 and the time limit T carried in the service access request according to the local service authorization verification factor 2, a verification object includes verifying authenticity of the service authorization certificate 2 and the time limit T; and it needs to be noted here that whether the current time is less than the time limit T is already verified at the first routing node, and no verification may be selected if the second routing node is not the routing node which first receives the service access request. The second routing node sends the service access request to the application server after the service authorization credibility verification is passed.

### Second application scenario

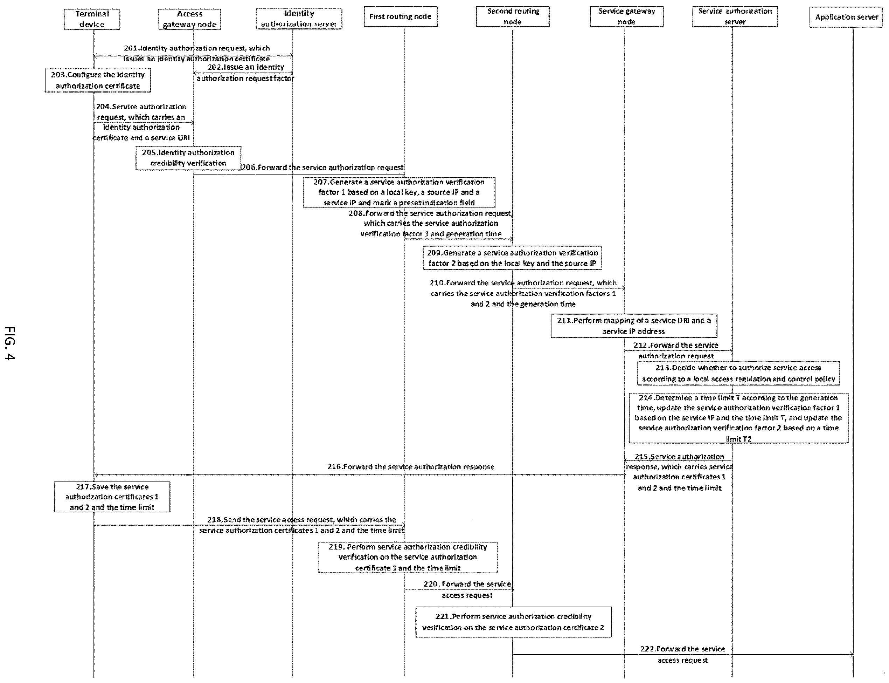

As shown in FIG. 4, a network connection condition of the second application scenario is the same as that of the first application scenario, but the terminal device, when starting to access to a service, cannot obtain a service IP or ID and only provides a service URI in the service authorization request, and the service IP is obtained subsequently by the service gateway node through mapping according to the URI. Corresponding flows include:
steps 201-206, the terminal device initiates an identity authorization request (carrying a service URI) to the identity authorization server. After the identity authorization verification is passed, the identity authorization server generates a related identity authorization certificate for the terminal device and issues an identity authorization verification factor to the access gateway node. An implementation process is the same as steps 101-106 in the embodiment and is not repeated.

At steps 207-208, the first routing node generates the service authorization verification factor 1 based on the local key and the source IP. Other processing processes are the same as steps 107-108 in the first application scenario.

At steps 209-210, the second routing node generates the service authorization verification factor 2 based on the local key and the source IP. Other processing processes are the same as steps 109-110 in the first application scenario.

At steps 211-212, a service gateway receives the service authorization request, performs mapping of a URI and the service IP, adds the service IP in the service authorization request and forwards the service authorization request to the service authorization server.

At steps 213-215, the service authorization server, after receiving the service authorization request, decides whether to authorize the service access according to the local access regulation and control policy. After determining to authorize, the time limit T is determined according to the generation time, and the processing process is the same as steps 112-114 in the first application scenario. Afterwards, the authorization server updates the service authorization verification factor 1 based on the time limit T, and obtains the corresponding service authorization certificates 1 and 2 based on configuration of the service authorization verification factors 1 and 2, so as to package the service authorization certificates 1 and 2 and the time limit T in the service authorization response to be sent to the service gateway node.

At steps 216-218, the service gateway node sends the service authorization response to the terminal device, the terminal device saves the service authorization certificates 1 and 2 and the time limit T, and a process that the terminal device accesses to the application server is basically the same as steps 115-117 in the first application scenario, which is not repeated.

At steps 219-222, the first routing node, after receiving the service access request, generates a temporary verification key Pcap1' (namely, the updated service authorization verification factor 1) according to the local key k1, the source IP and the like, and generates a reference service authorization certificate 1 by using Pcap1' and the time limit T, the service IP and the like, so as to compare whether the reference service authorization certificate 1 is equivalent to the service authorization certificate 1 carried in the service access request. If the reference service authorization certificate 1 is equivalent to the service authorization certificate 1 carried in the service access request, the first routing node continues to verify whether the current time is less than the time limit T in the service access request, and if the current time exceeds the time limit T, the terminal device is informed of reapplying for service authorization. If the current time does not exceed the time limit T, the service access request is forwarded to the second routing node.

The second routing node first generates a temporary verification key Pcap2' (namely, the service authorization verification factor 2) according to the local key k2, the source IP and the like and then generates a reference service authorization certificate 2 by using Pcap2', the service IP and the like, so as to compare whether the reference service authorization certificate 2 is equivalent to the service authorization certificate 2 carried in the service access request, and if the reference service authorization certificate 2 is equivalent to the service authorization certificate 2 carried in the service access request, the service access request is forwarded to the application server.

### Third application scenario

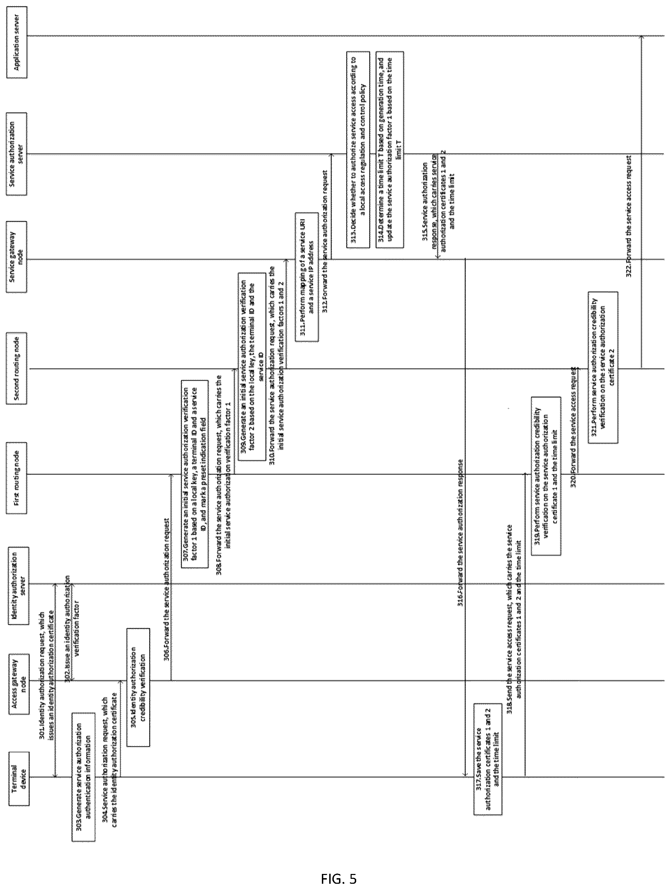

As shown in FIG. 5, a network connection condition of the third application scenario is the same as that of the first application scenario, but the terminal device, when starting to access to the service, may obtain the service ID, and carry the service ID in the subsequent service access all the time. A difference from the first application scenario is that the service authorization certificate in the present embodiment is based on a source ID and a service ID of the service authorization request. Corresponding flows include:
steps 301-306, the terminal device performs authentication to the identity authorization server and obtains the identity authorization certificate, the identity authorization certificate is carried in a service authorization request packet sent by the terminal device, and the identity authorization credibility verification is performed by the access gateway node. Only the service ID is carried in the service authorization request issued by the terminal device. An implementation process is the same as steps 101-106 in the embodiment and is not repeated.

At steps 307-308, the first routing node generates the service authorization verification factor 1 based on the local key, a terminal ID and the service ID. Other processing processes are the same as steps 107-108 in the first application scenario.

At steps 309-310, the second routing node generates the service authorization verification factor 2 based on the local key, the terminal ID and the service ID. Other processing processes are the same as steps 109-110 in the first application scenario.

At step 311, the service gateway receives the service authorization request and forwards the service authorization request to the service authorization server.

At steps 312-314, the service authorization server, after receiving the service authorization request, decides whether to authorize the service access, and determines the time limit T according to the generation time after determining to authorize, and processing processes are the same as that of steps 112-114 in the first application scenario. Afterwards, the service authorization server updates the service authorization verification factor 1 based on the time limit T. The service authorization server sends the service authorization response to the service gateway node, and the service authorization response carries the service authorization certificates 1 and 2 and the time limit T.

At steps 315-321, the service gateway node forwards the service authorization response to the terminal device, and the terminal device saves the service authorization verification certificates 1 and 2 and the time limit T. Afterwards, a process that the terminal accesses to an application service is the same as that of steps 115-117 in the first application scenario. The first routing node and the second routing node, after receiving a service access message, verify the service authorization certificate according to the local key, the source ID and the service ID, and other processing is the same as that of steps 118-121 in the first application scenario, which is not repeated.

### Fourth application scenario

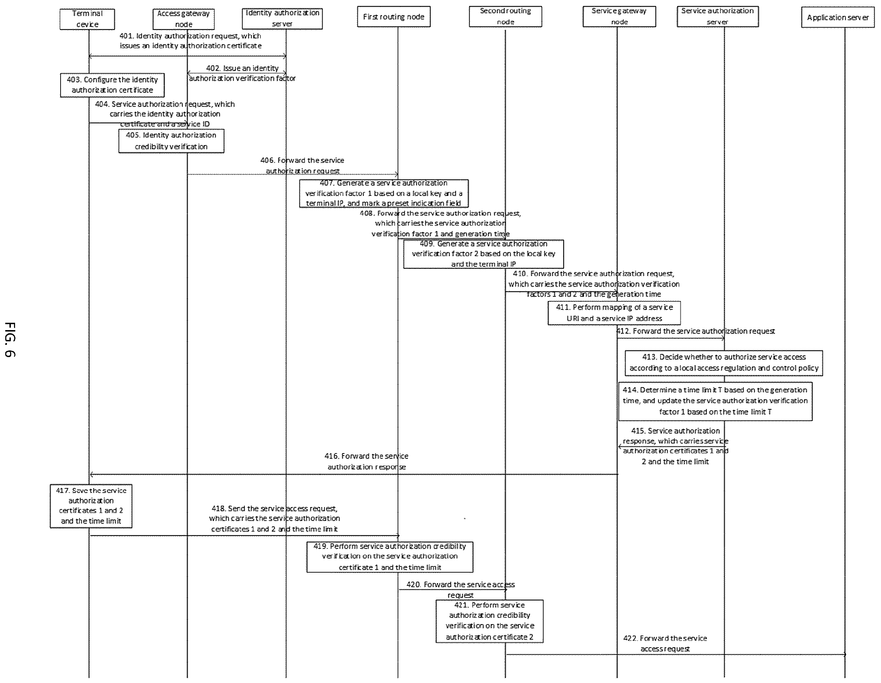

As shown in FIG. 6, a network connection condition of the fourth application scenario is the same as that of the first application scenario, but the terminal device, when starting to access to the service, cannot obtain the service IP and only provides the service ID in the service access request, mapping of the service ID and the service IP is performed by the service gateway node, and the service IP is carried in the subsequent service authorization request. Corresponding flows include:
steps 401-406, the terminal device performs authentication to the identity authorization server and obtains the identity authorization certificate, the identity authorization certificate is carried in the service authorization request packet sent by the terminal device, and the identity authorization credibility verification is performed by the access gateway node. The service ID is carried in the service authorization request issued by the terminal. An implementation process is the same as that of steps 101-106 in the embodiment and is not repeated.

At steps 407-408, the first routing node generates the service authorization verification factor 1 based on the local key and the terminal IP. Other processing processes are the same as steps 107-108 in the first application scenario.

At steps 409-410, the second routing node generates the service authorization verification factor 2 based on the local key, the terminal IP and the like. Other processing processes are the same as steps 109-110 in the first application scenario.

At steps 411-412, the service gateway receives the service authorization request, performs mapping of the service ID and the service IP, adds the service IP in a message and forwards the service authorization request to the service authorization server.

At steps 413-415, the service authorization server, after receiving the service authorization request, decides whether to authorize the service access according to the local access regulation and control policy. After determining to authorize, the time limit T is determined according to the generation time in the service authorization request, and the processing process is the same as that of steps 112-114 in the first application scenario. Afterwards, the service authorization server updates the service authorization verification factor 1 based on the time limit T. The service authorization server sends the service authorization response to the service gateway node, and the service authorization response carries the service authorization certificates 1 and 2 and the time limit T.

At steps 416-422, the service gateway node forwards the service authorization response to the terminal device, and the terminal device saves the service authorization verification certificates 1 and 2 and the time limit T. Afterwards, processes that the terminal accesses to the application service and the first routing node the second routing node perform verification are the same as that of steps 216-222 in the second application scenario, which is not repeated.

### Fifth application scenario

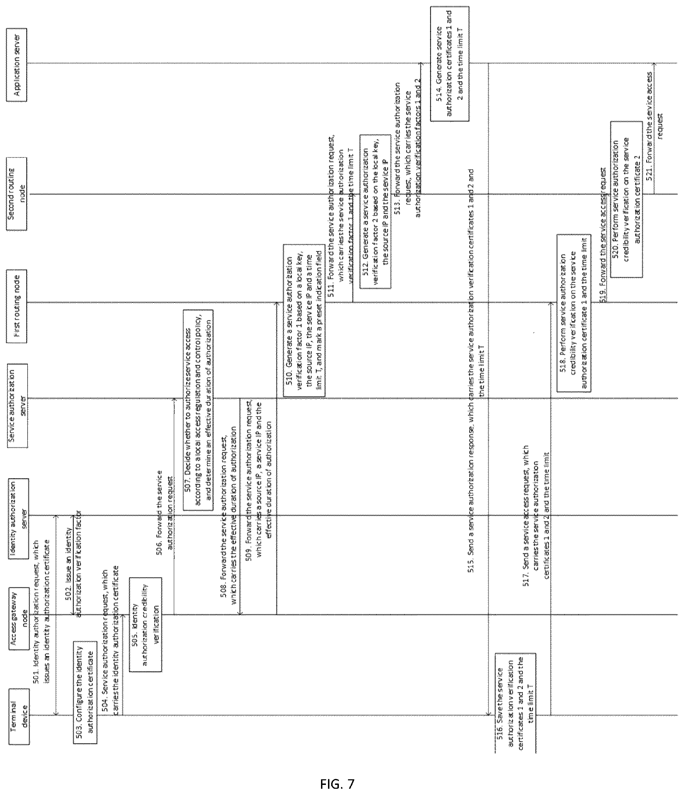

As shown in FIG. 7, both the identity authorization server and a service authorization server of the fifth application scenario are deployed on an access side, and the terminal device is connected to the identity authorization server through the access gateway node for identity authorization, and meanwhile connected to the service authorization server through the access gateway node for service access authorization. In the fifth application scenario, the service authorization request initiated by the terminal device carries the service IP, and corresponding flows include:

steps 501-506, the terminal device performs authentication to the identity authorization server and obtains the identity authorization certificate, the identity authorization certificate is carried in a service authorization request packet sent by the terminal device, and the identity authorization credibility verification is performed by the access gateway node. After verification is passed, the access gateway node forwards the service authorization request to the service authorization server. An implementation process is the same as steps 101-106 in the embodiment and is not repeated.

At steps 507-509, the service authorization server, after receiving the service authorization request, decides whether to authorize the service access according to the local access regulation and control policy, and determines a validity duration of authorization of this service access after authorization. Besides, the authorization server adds the validity duration of authorization into the service authorization request and sends the service authorization request to the first routing node.

At steps 510-511, the first routing node, after receiving the service authorization request packet, calculates the time limit T according to the local current time and the validity duration of authorization. The first routing node generates the service authorization verification factor 1 based on the local key, the time limit T, the source IP, the service IP and the like and marks the preset indication field. Afterwards, the first routing node forwards the service authorization request, and the service authorization request carries the service authorization verification factor 1 and the time limit T.

At steps 512-515, the second routing node, after receiving the service authorization request packet, judges according to a flag bit of the preset indication field that service authorization time does not need to be checked, generates the service authorization verification factor 2 only based on the local key, the source IP, the service IP and the like, and forwards the service authorization request, wherein the service authorization request carries the service authorization verification factor 2. The application server generates the service authorization certificates 1 and 2 according to the service authorization verification factors 1 and 2, and locally determines the time limit T; and afterwards, the application server sends the service authorization response to the terminal device, wherein the service authorization response carries the service authorization verification certificates 1 and 2 and the time limit T.

At steps 516-521, the terminal device saves the service authorization verification certificates 1 and 2 and the time limit T, wherein a process that the terminal accesses to the application service, and the first routing node and the second routing node perform verification is the same as that of steps 116-121 in the first application scenario and is not repeated.

### Sixth application scenario

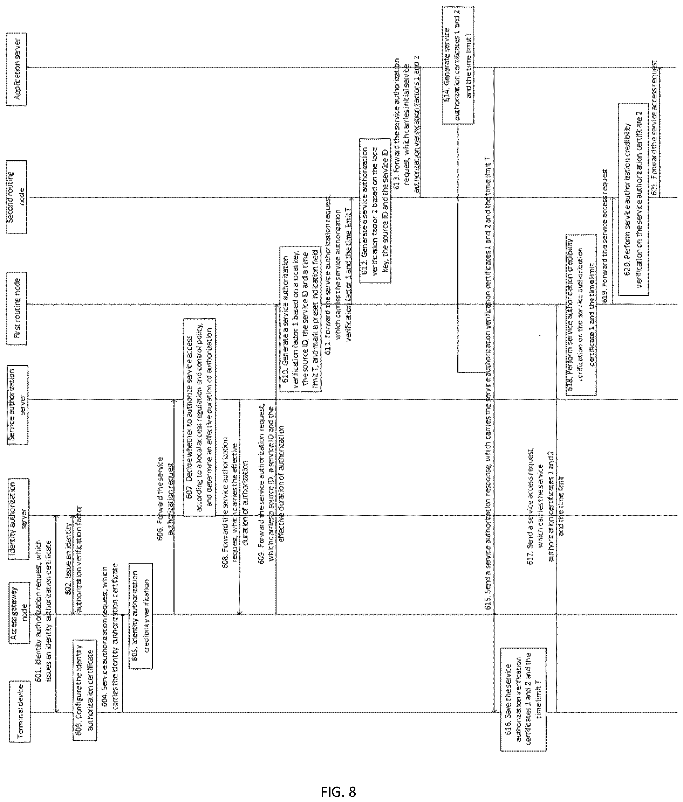

As shown in FIG. 8, a network connection condition of the sixth application scenario is the same as that of the fifth application scenario, but the terminal device, when starting to access to the service, may obtain the service ID, and carry the service ID in the subsequent service access all the time. A difference from the fifth application scenario is that the service authorization certificate in the present embodiment is generated based on a source ID and a service ID. Corresponding flows include:
steps 601-606, the terminal device performs authentication to the identity authorization server and obtains the identity authorization certificate, the identity authorization certificate is carried in a service authorization request packet sent by the terminal device, and the identity authorization credibility verification is performed by the access gateway node. After verification is passed, the access gateway node forwards the service authorization request to the service authorization server. Only the service ID is carried in the service authorization request issued by the terminal. An implementation process is the same as steps 101-106 in Embodiment 1 and is not repeated.

At steps 607-609, the service authorization server decides whether to authorize the service access according to the local access regulation and control policy. After authorization, the validity duration of authorization is determined. Afterwards, the authorization server forwards an authorization request packet to the access gateway, and the validity duration of authorization is added and carried. The access gateway node, after judging that access to the service is allowed, forwards to the first routing node the service authorization request which contains the source ID, the service ID, and the validity duration of authorization for allowing the access.

At steps 610-611, the first routing node, after receiving the service authorization request packet, judges according to a flag bit of a first indication field that the present node needs to check the time limit. The time limit T of this access is calculated based on the local current time and the validity duration of authorization. The first routing node generates the service authorization verification factor 1 based on the local key, the time limit T, the source ID, the service ID and the like and sets a corresponding flag bit. The first routing node forwards the service authorization request, and the service authorization request carries the service authorization verification factor 1 and the time limit.

At steps 612-613, the second routing node, after receiving the service authorization request packet, judges according to the flag bit of the preset indication field that the present node does not need to check the service authorization time. The service authorization verification factor 2 is generated based on the local key, the source ID, the service ID and the like. The second routing node forwards the service authorization request, and the service authorization request carries the service authorization verification factor 2.

At steps 614-616, the application server generates the service authorization certificates 1 and 2 according to the service authorization verification factors 1 and 2, and locally determines the time limit T; and afterwards, the application server sends to the terminal device the service authorization response carrying the service authorization certificates 1 and 2 and the time limit T. The terminal device saves the service authorization certificates 1 and 2 and the time limit T, and a processing process is the same as that of 115-117 in the first application scenario.

At steps 617-621, the terminal accesses to the application service and carries the service ID. The first routing node and the second routing node, after receiving a service access message, verify the service authorization certificate according to the local key, the source ID and the service ID, and other processing is the same as that of steps 117-121 in the first application scenario, which is not repeated.

### Seventh application scenario

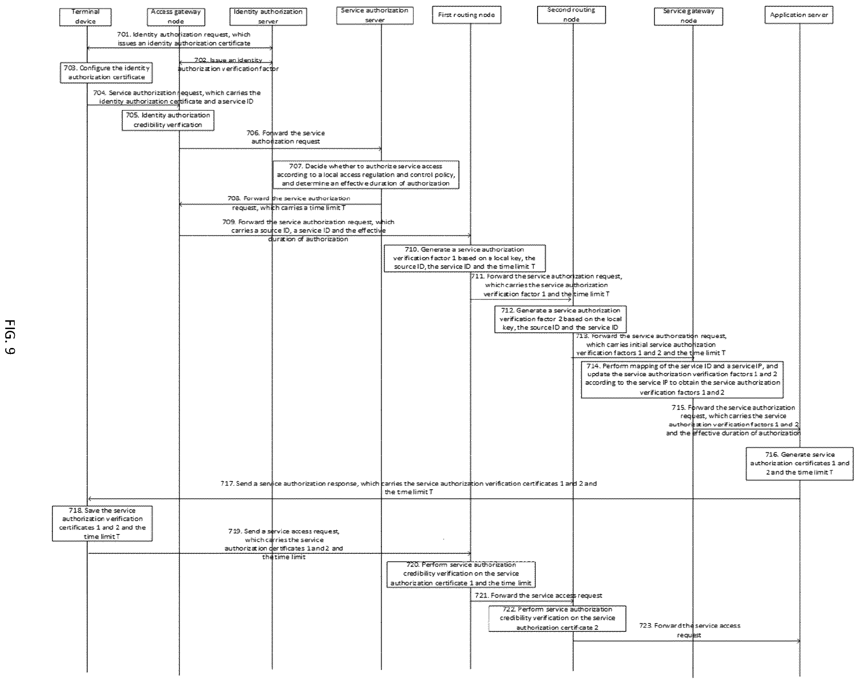

As shown in FIG. 9, a network connection condition of the seventh application scenario is the same as that of the fifth application scenario. The terminal device, when starting to access to the service, cannot obtain the service IP but can obtain the service ID. The service ID is carried in the service authorization request, mapping of the service ID and the service IP is performed by the service gateway node, and the service IP is carried in the subsequent service authorization request. Corresponding flows include:
steps 701-709, the terminal device performs authentication to the identity authorization server and obtains the identity authorization certificate, the identity authorization certificate is carried in a service authorization request packet sent by the terminal device, and the identity authorization credibility verification is performed by the access gateway node. After verification is passed, the access gateway node forwards the service authorization request to the service authorization server. Only the service ID is carried in the service authorization request sent by the terminal. The authorization server decides whether to allow the service authorization and the time limit T, and forwards the service authorization request. The service gateway node forwards the message to the first routing node. An implementation process is the same as steps 601-609 in the embodiment and is not repeated.

At steps 710-711, the first routing node generates the service authorization verification factor 1 based on the local key, the terminal IP and the like. Other processing processes are the same as steps 107-108 in the first application scenario.

At steps 712-713, the second routing node generates the service authorization verification factor 2 based on the local key, the terminal IP and the like. Other processing processes are the same as steps 109-110 in the first application scenario.

At steps 714-715, the service gateway receives the service authorization request, performs mapping of the service ID and the service IP, respectively regenerates the service authorization verification factors 1 and 2 according to the service authorization verification factors 1 and 2 and the service IP, and forwards the service authorization request to the server.

At steps 716-718, the application server generates the service authorization certificates 1 and 2 according to the service authorization verification factors 1 and 2 and the time limit T, and sends to the terminal device the service authorization response carrying the service authorization certificates 1 and 2 and the time limit T. The terminal device saves the service authorization certificates 1 and 2 and the time limit T, and a processing process is the same as that of 115-117 in the first application scenario.

At steps 719-723, a process that the terminal accesses to the application service and the first routing node and the second routing node perform verification is the same as that of 419-423 in the fourth application scenario, which is not repeated.

### Eighth application scenario

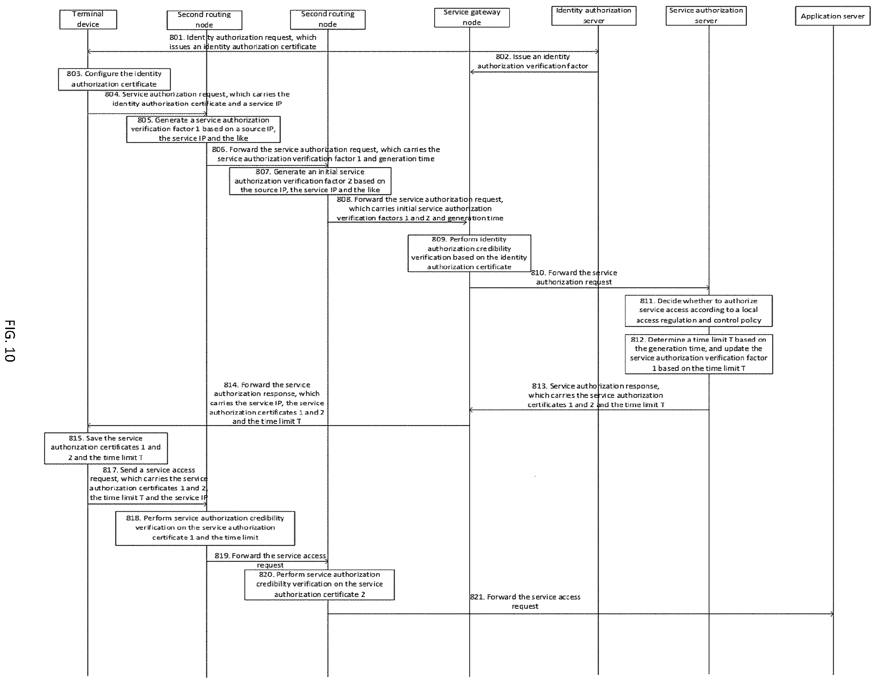

As shown in FIG. 10, both the identity authorization server and the service authorization server of the eighth application scenario are deployed on a service side, and the terminal device is connected to the identity authorization server through the service gateway node for user identity authentication, and meanwhile connected to the service authorization server through the service gateway node for service access authorization. Besides, the service authorization request initiated by the terminal device carries the service IP, and corresponding flows include:
steps 801-802, the terminal device performs authentication to the identity authorization server and obtains the identity authorization certificate, and the identity authorization server issues the authentication verification factor to the service gateway.

At steps 803-808, the terminal device sends the service authorization request which carries the identity authorization certificate. A processing process that the first routing node and the second routing node generate an initial authorization verification factor is the same as that of steps 107-110 in the first application scenario and is not repeated.

At steps 809-810, the service gateway node generates the identity authorization certificate according to an identity ID and the identity authorization verification factor, checks the identity authorization certificate with the identity authorization certificate carried in the service authorization request, judges whether the service authorization request is already authenticated, and forwards the service authorization request after the verification is passed.

At steps 811-820, the service authorization server sends the service authorization response, the service gateway node forwards the service authorization response to the terminal device, the terminal device, after receiving the service authorization response, saves the service authorization certificates 1 and 2 and the time limit T, and a subsequent process that the terminal accesses to the service, and the first routing node and the second routing node verify the message is the same as that of steps 112-121 in the first application scenario and is not repeated.

### Ninth application scenario

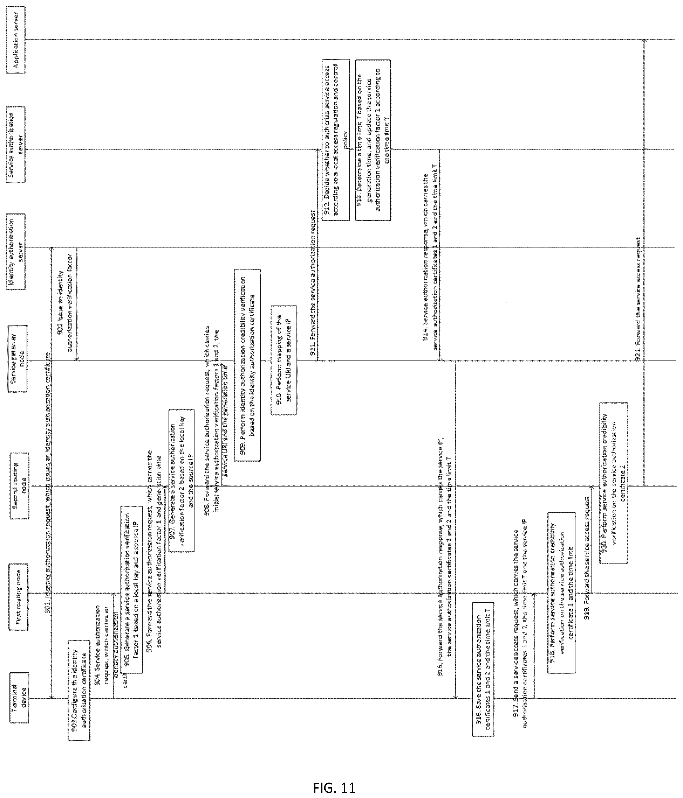

As shown in FIG. 11, in the present embodiment, a network connection condition is the same as that of the eighth application scenario, but the terminal device cannot obtain the service IP or the ID at the start and only provides the service URI in the service authorization request, and mapping of the URI and the service IP is performed subsequently by the service gateway node. Corresponding flows include:
steps 901-904, the terminal device performs authentication to the identity authorization server and obtains the identity authorization certificate, the identity authorization certificate is carried in a service authorization request packet sent by the terminal device, and verification is performed by the service gateway node. Only the service URI is carried in the service authorization request issued by the terminal.

At steps 905-906, the first routing node generates the service authorization verification factor 1 based on the local key and the terminal IP. Other processing processes are the same as steps 107-108 in the first application scenario.

At steps 907-908, the second routing node generates the service authorization verification factor 2 based on the local key and the terminal IP. Other processing processes are the same as steps 109-110 in the first application scenario.

At steps 909-911, the service gateway node receives the service authorization request and checks the identity authorization certificate carried in the service authorization request. After verification is passed, mapping of the URI and the service IP is performed, the service IP is added into the service authorization request, and the service authorization request is forwarded to the service authorization server.

At steps 912-914, the service authorization server, after receiving the service authorization request, decides whether to authorize this service access and calculates a time limit of this authorization, wherein a processing process is the same as that of steps 112-114 in the first application scenario. The service authorization server updates the service authorization verification factor 1 based on the time limit T and the service IP, and updates the service authorization verification factor 2 based on the service IP. The service authorization server sends to the terminal device the service authorization response which carries the service authorization certificates 1 and 2 and the time limit T of authorization.

At steps 915-921, the service gateway node sends the service authorization response to the terminal device, the terminal device saves the service authorization verification certificates 1 and 2 and the time limit T, and a process that the terminal accesses to the application service and the first routing node and the second routing node perform verification is the same as that of 216-222 in the second application scenario and is not repeated.

### Tenth application scenario

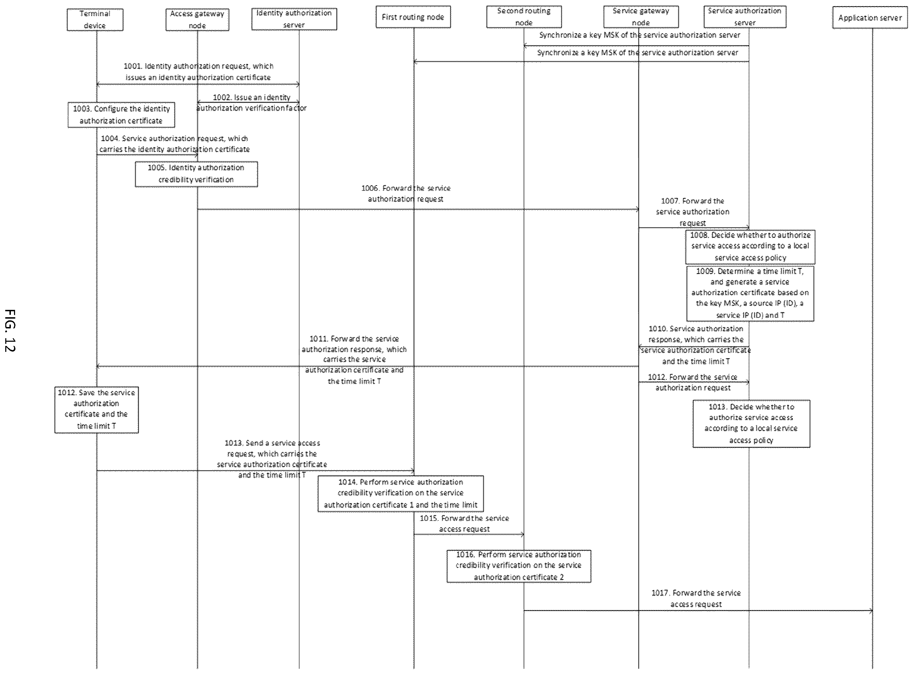

As shown in FIG. 12, the tenth application scenario adopts a symmetric-key algorithm for generating a service authorization certificate, and the service authorization server issues a symmetric key MSK to the first routing node and the second routing node. Corresponding flows include:
steps 1001-1006, the terminal device performs authentication to the identity authorization server and obtains the identity authorization certificate, the identity authorization certificate is carried in a service authorization request packet sent by the terminal device, and the identity authorization credibility verification is performed by the access gateway node. After verification is passed, the access gateway node forwards the service authorization request to the service authorization server. An implementation process is the same as steps 101-106 in the embodiment and is not repeated.

At steps 1007-1010, the service authorization server decides whether to authorize the service access according to the local access regulation and control policy; if the service access is authorized, the authorization server calculates a time limit T based on local generation time and a preset time length, and generates a service authorization certificate based on minimum shift keying (MSK) of the service authorization verification factor, a source IP (ID), a service IP (ID) and the time limit T. The service authorization server sends to the terminal device the service authorization response which carries the service authorization certificate and the time limit T.

At steps 1011-1017, the service gateway node sends the service authorization response to the terminal device, the terminal device saves the service authorization verification certificate and the time limit T, a process that the terminal accesses to the application service and the first routing node and the second routing node perform verification is basically the same as a principle of 115-121 in the first application scenario, and a difference is that both the first routing node and the second routing node checks the service authorization certificate based on the service authorization verification factor MSK, the time limit and the like.

### Eleventh application scenario

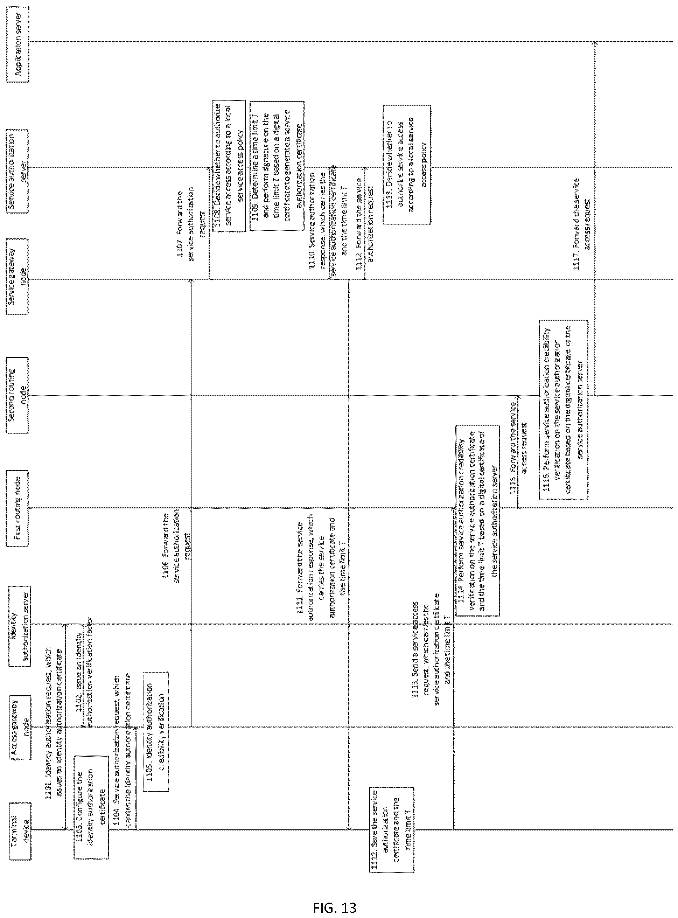

As shown in FIG. 13, the eleventh application scenario adopts the symmetric-key algorithm for generating the service authorization certificate, before the terminal accesses to the service, a digital certificate of the service authorization server is preset in each routing node, and meanwhile, the service authorization server needs to perform time synchronization with each routing node. Corresponding flows include:
steps 1101-1106, the terminal device performs authentication to the identity authorization server and obtains the identity authorization certificate, the identity authorization certificate is carried in the service authorization request packet sent by the terminal device, and the identity authorization credibility verification is performed by the access gateway node. After verification is passed, the access gateway node forwards the service authorization request to the service authorization server. An implementation process is the same as steps 101-106 in the embodiment and is not repeated.

At steps 1107-1110, the authorization server decides whether to authorize the service access according to the local access regulation and control policy; if the service access is authorized, the authorization server calculates the time limit T based on the local generation time and a preset time length, and performs signature on the source IP (ID), the service IP (ID) and the time limit T by using the digital certificate of the service authorization server to generate the service authorization certificate. The service authorization server sends to the terminal device the service authorization response which carries the service authorization certificate and the time limit.

At steps 1111-1117, the service gateway node sends the service authorization response to the terminal device, the terminal device saves the service authorization verification certificates 1 and 2 and the time limit T, a process that the terminal accesses to the application service, and the first routing node and the second routing node perform verification is basically the same as that of 115-121 in the first application scenario, and both the first routing node and the second routing node perform service authorization credibility verification on the service authorization certificate based on the digital certificate of the service authorization server; and besides, the first routing node, as the first one, performs service authorization credibility verification on the time limit of the service authorization certificate.

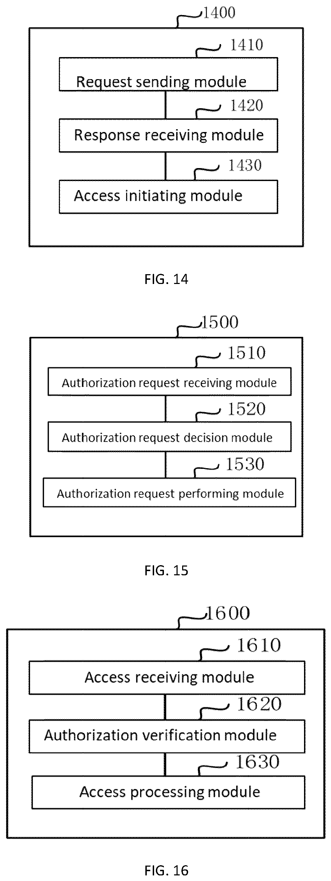

Corresponding to the method shown in FIG. 2 above, embodiments of the present application further provide a terminal device. FIG. 14 is a schematic structural diagram of a terminal device 1400 in the embodiment of the present application, including the following modules 1410 to 1430.

A request sending module 1410 is configured to send a service authorization request for a target application to a service authorization server, wherein the service authorization server determines, according to a local access regulation and control policy configured for the target application, whether to allow the terminal device to perform service access on the target application, and the service authorization server configures a service authorization certificate and a time limit of the service authorization certificate for the terminal device in response to that the terminal device is allowed to perform the service access on the target application.

A response receiving module 1420 is configured to receive a service authorization response, wherein the service authorization response carries the service authorization certificate and the time limit of the service authorization certificate which are configured by the service authorization server.

An access initiating module 1430 is configured to send a service access request for the target application to a routing node, wherein the service access request carries the service authorization certificate and the time limit, and the service authorization certificate and the time limit are used by the routing node for performing service authorization credibility verification, and forwarding the service access request to an application server of the target application in response to that the service authorization credibility verification is passed.

Optionally, the request sending module 1410 of the terminal device in the embodiment of the present application is further configured to: send an identity authorization request to the identity authorization server, wherein the identity authorization request carries identity authorization authentication information provided by the terminal device, the identity authorization authentication information is used by the identity authorization server for performing identity authorization verification, in response to that the identity authorization verification is passed, an identity authorization certificate is configured for the terminal device an identity authorization verification factor is configured for an access gateway node of the terminal device, and the identity authorization verification factor is used for performing identity authorization credibility verification on the identity authorization certificate; and the service authorization request further carries the identity authorization certificate provided by the terminal device, wherein the terminal device sends the service authorization request to the service authorization server through the access gateway node of the terminal device and/or a service gateway node of the target application, the identity authorization certificate is used by the access gateway node and/or the service gateway node for performing identity authorization credibility verification on the access gateway node based on the identity authorization verification factor, and the service authorization request is forwarded to the service authorization server after the identity authorization credibility verification is passed.

Optionally, the service authorization certificate and the time limit are configured through the application server when the service authorization server forwards the service authorization request to the application server of the target application after the service authorization verification is passed, and the service authorization response is sent by the application server to the terminal device; or the service authorization certificate and the time limit are configured by the service authorization server, and the service authorization response is sent by the service authorization server to the terminal device.

Apparently, the terminal device shown in FIG. 14 may serve as an executive body of steps of a corresponding terminal device side in the method shown in FIG. 2, so steps and corresponding functions of the method shown in FIG. 1 may be implemented. The principle is the same and thus will not be specifically repeated herein.

Corresponding to the method shown in FIG. 2 above, embodiments of the present application further provides a service authorization server. FIG. 15 is a schematic structural diagram of a service authorization server 1500 in embodiments of the present application, including the following modules 1510 to 1530.

An authorization request receiving module 1510 is configured to receive a service authorization request for a target application sent by a terminal device.

An authorization request decision module 1520 is configured to determine whether to allow the terminal device to perform service access on the target application according to an access regulation and control policy and a current resource state for the target application.

An authorization request performing module 1530 is configured to configure a service authorization certificate and a time limit of the service authorization certificate for the terminal device in a case that the terminal device is allowed to perform the service access on the target application, such that the terminal device sends a service access request for the target application to a routing node, wherein the service access request carries the service authorization certificate and the time limit, and the service authorization certificate and the time limit are used by the routing node for performing service authorization credibility verification, and in response to that the service authorization credibility verification is passed, the service access request is forwarded to an application server of the target application.

The terminal device sends the service authorization request to a service gateway node through the routing node and then the service gateway node forwards the service authorization request to the service authorization server.

Optionally, the service authorization request carries a service identification provided by the terminal device and a service authorization verification factor provided by the routing node, the service authorization verification factor is generated based on a local key, and a source IP of the service authorization request after the routing node receives the service authorization request, and the service gateway node, after receiving the service authorization request, determines a service IP based on the service identification in the service authorization request and updates the service authorization verification factor in the service authorization request based on the service IP; or the service authorization request carries the service IP provided by the terminal device and the service authorization verification factor provided by the routing node, and the service authorization verification factor is generated based on the local key, the source IP of the service authorization request and the service IP in the service authorization request after the routing node receives the service authorization request; and the authorization request performing module 1530 is specifically configured to: configure the service authorization certificate for the terminal device based on the service authorization verification factor in the service authorization request.

Optionally, the service authorization request carries the service identification provided by the terminal device and the service authorization verification factor provided by the routing node, the service authorization verification factor is generated based on the local key, and the source IP of the service authorization request after the routing node receives the service authorization request, and the service gateway node, after receiving the service authorization request, determines the service IP based on the service identification in the service authorization request and adds the service IP into the service authorization request; or the service authorization request carries the service IP provided by the terminal device and the service authorization verification factor provided by the routing node, and the service authorization verification factor is generated based on the local key, and the source IP of the service authorization request after the routing node receives the service authorization request; and the authorization request performing module 1530 is specifically configured to: configure the service authorization certificate for the terminal device based on the service IP and the service authorization verification factor in the service authorization request.

Optionally, the service authorization verification factor provided by the routing node is generated after the routing node receives the service authorization request, and the service authorization request also carries generation time of the service authorization verification factor provided by the routing node; and the authorization request performing module 1530 is specifically configured to: configure a time limit for the terminal device based on the generation time in the service authorization request.

The service authorization certificate is also obtained based on configuration of the time limit.

Optionally, the authorization request performing module 1530 is specifically configured to: determine a validity duration of authorization after the service authorization verification is passed, and add the validity duration of authorization into the service authorization request to be sent to the routing node; wherein the application server configures the time limit of the service authorization certificate for the terminal device based on the validity duration of authorization in the service authorization request.

The routing node, after receiving the service authorization request, generates a service authorization verification factor based on the local key, the source IP of the service authorization request and the validity duration of authorization of the service authorization request, and the service authorization verification factor is added into the service authorization request to be forwarded to the application server; wherein the application server configures the service authorization certificate for the terminal device based on the service authorization verification factor in the service authorization request.

The service authorization request carries the service identification provided by the terminal device, the routing node, after receiving the service authorization request, sends the service authorization request to the service gateway node of the target application, and then the service gateway node sends the service authorization request to the application server, wherein the service gateway node, after receiving the service authorization request, determines a service IP based on the service identification in the service authorization request, and updates the service authorization verification factor in the service authorization request based on the service IP; or the service authorization request carries the service IP provided by the terminal device, and the routing node, after receiving the service authorization request, further generates the service authorization verification factor based on the service IP of the service authorization request.

Apparently, the service authorization server shown in FIG. 15 may serve as an executive body of steps of a corresponding service authorization server side in the method shown in FIG. 2, so steps and corresponding functions of the method shown in FIG. 1 may be implemented. The principle is the same and thus will not be specifically repeated herein.

Corresponding to the method shown in FIG. 2 above, embodiments of the present application further provide a routing node. FIG. 16 is a schematic structural diagram of a service authorization server 1600 in embodiments of the present application, including the following modules 1610 to 1630.

An access receiving module 1610 is configured to receive a service access request sent by a terminal device, wherein the service access request carries a service authorization certificate and a time limit of the service authorization certificate, and the service authorization certificate and the time limit are configured by a service authorization server for the terminal device.

An authorization verification module 1620 is configured to perform service authorization credibility verification based on the service authorization certificate and the time limit in the service access request.

An access processing module 1630 is configured to forward the service access request to an application server of a target application in a case that the service authorization credibility verification is passed, such that the application server establishes a service connection for the terminal device.

Optionally, the routing node of the present application further includes the following modules.

An authorization forwarding module is configured to receive a service authorization request sent by the terminal device; and generate a service authorization verification factor based on a local key and a source IP of the service authorization request, and add the service authorization verification factor and corresponding generation time into the service authorization request to be sent to a service gateway node of the target application, such that the service gateway node of the target application sends the service authorization request to the service authorization server.

The service authorization request carries a service identification provided by the terminal device, the service gateway node, before forwarding the service authorization request to the service authorization server, determines a service IP based on the service identification in the service authorization request, and updates the service authorization verification factor in the service authorization request based on the service IP, and the service authorization server configures the service authorization certificate for the terminal device based on the updated service authorization verification factor in the service authorization request and configures the time limit for the terminal device based on generation time in the service authorization request; or the service authorization request carries a service IP provided by the terminal device, the service authorization server updates the service authorization verification factor in the service authorization request based on the service IP in the service authorization request, configures the service authorization certificate for the terminal device based on the updated service authorization verification factor and configures the time limit for the terminal device based on the generation time in the service authorization request.

Optionally, a preset indication field is set in the service authorization request, the preset indication field is used for indicating whether the service authorization request is already forwarded through other routing nodes during a process of being sent to the service authorization server; and the access processing module 1630 is specifically configured to: determine whether the service authorization request is already forwarded through another routing node based on the preset indication field of the service authorization request; if yes, add the generated service authorization verification factor into the service authorization request to be sent to the service gateway node of the target application; and if not, set the preset indication field of the service access request as a field value being used for indicating that the service access request is already forwarded through another routing node, and add the service authorization verification factor and corresponding generation time into the service authorization request to be sent to the service gateway node of the target application.

Optionally, the authorization verification module 1620 is specifically configured to: generate a reference service authorization certificate based on a local service authorization verification factor and the time limit in the service access request and compares the reference service authorization certificate with the service authorization certificate in the service access request, so as to complete the service authorization credibility verification.

Optionally, the service authorization certificate is generated by the service authorization server based on a key or a digital certificate of the service authorization server; and the authorization verification module 1620 is further configured to: obtain the time limit of the service authorization certificate and a key or a digital certificate of the service authorization server from the service authorization server before performing service authorization credibility verification based on the service authorization certificate and the time limit in the service access request; wherein the authorization verification module 1620 performs the service authorization credibility verification on the service authorization certificate in the service access request based on the key or the digital certificate provided by the service authorization server, and performs the service authorization credibility verification on the time limit in the service access request based on local time and a preset validity duration of authorization.

Apparently, the routing node shown in FIG. 16 may serve as an executive body of steps of a corresponding routing node side in the method shown in FIG. 2, so steps and corresponding functions of the method shown in FIG. 1 may be implemented. The principle is the same and thus will not be specifically repeated herein.

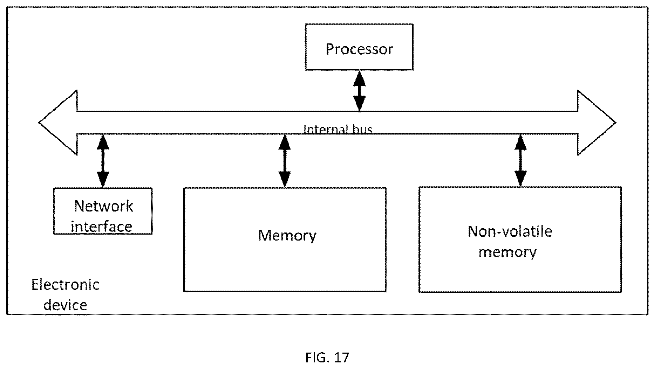

FIG. 17 is a schematic structural diagram of an electronic device in embodiments of the present specification. Please refer to FIG. 17, on a hardware level, the electronic device includes a processor, and optionally, further includes an internal bus, a network interface, and a memory. The memory may include an internal storage, such as a high-speed random-access memory (RAM), or may also include a non-volatile memory, such as at least one disk memory. Certainly, the electronic device may also include hardware needed by other services.

The processor, the network interface and the memory may be mutually connected through the internal bus, and the internal bus may be an industry standard architecture (ISA) bus, a peripheral component interconnect (PCI) bus, an extended industry standard architecture (EISA) bus, or the like. The bus may be divided into an address bus, a data bus, a control bus, or the like. For convenience of representation, only one double sided arrow is used for representing in FIG. 17, which does not mean that there is only one bus or one type of bus.

The memory is configured to store a program. Specifically, the program may include a program code, and the program code includes a computer operation instruction. The memory may include an internal storage and a non-volatile memory and provides an instruction and data for the processor.

Optionally, the processor reads the corresponding computer program from the non-volatile memory into the internal storage to run, so as to form the terminal device shown in FIG. 14 above on a logical level. Correspondingly, the processor executes the program stored in the memory and is specifically configured to perform the following operations.

A service authorization request for a target application is sent to a service authorization server, wherein the service authorization server determines, according to a local access regulation and control policy configured for the target application, whether to allow the terminal device to perform service access on the target application, and performs service authorization verification after the terminal device is allowed to perform the service access on the target application.

A service authorization response is received, wherein the service authorization response carries a service authorization certificate and a time limit of the service authorization certificate which are configured by the service authorization server after the service authorization verification is passed.

A service access request for the target application is sent to a routing node, wherein the service access request carries the service authorization certificate and the time limit, the service authorization certificate and the time limit are used by the routing node for performing service authorization credibility verification, and forwarding the service access request to an application server of the target application after the service authorization credibility verification is passed.

Alternatively, the processor reads the corresponding computer program from the non-volatile memory into the internal storage to run so as to form the service authorization server shown in FIG. 15 on a logical level. Correspondingly, the processor executes the program stored in the memory and is specifically configured to perform the following operations.

A service authorization request for a target application sent by a terminal device is received
Whether to allow the terminal device to perform service access on the target application is determined according to a local access regulation and control policy configured for the target application.

Service authorization verification is performed on the terminal device in a case that the terminal device is allowed to perform the service access on the target application, and configuring a service authorization certificate and a time limit of the service authorization certificate for the terminal device after the service authorization verification is passed, such that the terminal device sends a service access request for the target application to a routing node, wherein the service access request carries the service authorization certificate and the time limit, and the service authorization certificate and the time limit are used by the routing node for performing service authorization credibility verification, and forwarding the service access request to an application server of the target application after the service authorization credibility verification is passed.

Alternatively, the processor reads the corresponding computer program from the non-volatile memory into the internal storage to run so as to form the routing node shown in FIG. 16 on a logical level. Correspondingly, the processor executes the program stored in the memory and is specifically configured to perform the following operations.
A service access request sent by a terminal device is received, wherein the service access request carries a service authorization certificate and a time limit of the service authorization certificate, and the service authorization certificate and the time limit are configured by a service authorization server when the service authorization server performs service authorization verification based on a service authorization request sent by a terminal and after the service authorization verification is passed;
Service authorization credibility verification is performed based on the service authorization certificate and the time limit in the service access request; and
The service access request is forwarded to an application server of the target application in a case that the service authorization credibility verification is passed, such that the application server establishes a service connection for the terminal device.

The above service access method disclosed in the embodiment of the present specification may be applied to and implemented by the processor. The processor may be an integrated circuit chip with a signal processing capability. During an implementing process, various steps of the above method may be completed by an integrated logic circuit of hardware in the processor or instructions of a software form. The processor may be a general-purpose processor, including a central processing unit (CPU), a network processor (NP) or the like; or may also be a digital signal processor (DSP), an application specific integrated circuit (ASIC), a field-programmable gate array (FPGA) or another programmable logic device, a discrete gate or a transistor logic device, a discrete hardware component. Each method, steps and logical block diagrams disclosed in the embodiments of the present application may be implemented or performed. The general-purpose processor may be a microprocessor or the processor may also be any conventional processor. The steps of the methods disclosed in combination with the embodiments of the present application may be directly embodied as being performed and completed by a hardware decoding processor, or being performed and completed by a combination of hardware and software modules in a decoding processor. The software module may be located in a storage medium mature in the art, such as a random access memory, a flash memory, a read-only memory, a programmable read-only memory or an electrically erasable programmable memory and a register. The storage medium is located in the memory, and the processor reads information in the memory, and completes steps of the above method in combination with hardware.

Certainly, in addition to a software implementation mode, the electronic device of the present specification does not exclude other implementation modes, such as a logic device or software and hardware combined mode, that is, an executive body of the following processing flows is not limited to each logical unit, and may also be hardware or a logic device.

Besides, embodiments of the present application further provide a computer-readable storage medium, the computer-readable storage medium stores one or more programs, and the one or more programs include instructions.

Optionally, the above instructions, when executed by a portable electronic device including a plurality of application programs, can cause the portable electronic device to perform steps on the corresponding terminal device side in the method shown in FIG. 2, including the following.

A service authorization request for a target application is sent to a service authorization server, wherein the service authorization server determines, according to a local access regulation and control policy configured for the target application, whether to allow the terminal device to perform service access on the target application, and performs service authorization verification after the terminal device is allowed to perform the service access on the target application.

A service authorization response is received, wherein the service authorization response carries a service authorization certificate and a time limit of the service authorization certificate which are configured by the service authorization server after the service authorization verification is passed.

A service access request for the target application is sent to a routing node, wherein the service access request carries the service authorization certificate and the time limit, the service authorization certificate and the time limit are used by the routing node for performing service authorization credibility verification, and forwarding the service access request to an application server of the target application after the service authorization credibility verification is passed.

Optionally, the above instructions, when executed by a portable electronic device including a plurality of application programs, can cause the portable electronic device to perform steps on the corresponding service authorization server side in the method shown in FIG. 2, including the following.

A service authorization request for a target application sent by a terminal device is received.

Whether to allow the terminal device to perform service access on the target application is determined according to a local access regulation and control policy configured for the target application.

Service authorization verification is performed on the terminal device in a case that the terminal device is allowed to perform the service access on the target application, and configuring a service authorization certificate and a time limit of the service authorization certificate for the terminal device after the service authorization verification is passed, such that the terminal device sends a service access request for the target application to a routing node, wherein the service access request carries the service authorization certificate and the time limit, and the service authorization certificate and the time limit are used by the routing node for performing service authorization credibility verification, and forwarding the service access request to an application server of the target application after the service authorization credibility verification is passed.

Optionally, the above instructions, when executed by a portable electronic device including a plurality of application programs, can cause the portable electronic device to perform steps on the corresponding routing node side in the method shown in FIG. 2, including the following.

A service access request sent by a terminal device is received, wherein the service access request carries a service authorization certificate and a time limit of the service authorization certificate, and the service authorization certificate and the time limit are configured by a service authorization server when the service authorization server performs service authorization verification based on a service authorization request sent by a terminal and after the service authorization verification is passed;

Service authorization credibility verification is performed based on the service authorization certificate and the time limit in the service access request.

The service access request is forwarded to an application server of the target application in a case that the service authorization credibility verification is passed, such that the application server establishes a service connection for the terminal device.

Those skilled in the art should understand that the embodiments of the present specification may be provided as a method, a system, or a computer program product. Thus, the present specification may be in a form of complete hardware embodiment, complete software embodiment or software and hardware combined embodiment. Besides, the present specification may adopt a form of a computer program product implemented on one or more computer applicable storage media (including but not limited to a disk memory, a CD-ROM, an optical memory and the like) including a computer applicable program code.

Specific embodiments of the present specification are described above. The other embodiments fall within the scope of the appended claims. In some cases, actions or steps recorded in the claims may be executed in a sequence different from that in the embodiments and may still achieve expected results. Besides, processes illustrated in the accompanying drawings do not necessarily need the illustrated specific sequences or consecutive orders to achieve expected results. In some implementations, multi-task processing and parallel processing are also suitable or possibly beneficial.

The foregoing descriptions are merely embodiments of the present specification and are not intended to limit the present specification. There may be various modifications and changes of the present specification to those skilled in the art. Any modification, equivalent replacement, improvement or the like made within the spirit and principle of the present specification shall fall within the scope of the claims of the present specification. Besides, all other embodiments obtained by those ordinarily skilled in the art without making creative efforts should fall within the scope of protection of the present application.

## Claims

1. A service access method, applied to a terminal device, comprising:
sending a service authorization request for a target application to a service authorization server, wherein the service authorization server determines, according to a local access regulation and control policy configured for the target application, whether to allow the terminal device to perform service access on the target application, and in response to that the terminal device is allowed to perform the service access on the target application, the service authorization server configures a service authorization certificate and a time limit of the service authorization certificate for the terminal device;
receiving a service authorization response, wherein the service authorization response carries the service authorization certificate and the time limit of the service authorization certificate which are configured by the service authorization server; and
sending a service access request for the target application to a routing node, wherein the service access request carries the service authorization certificate and the time limit, the service authorization certificate and the time limit are used by the routing node for performing service authorization credibility verification, and in response to that the service authorization credibility verification is passed, the service access request is forwarded to an application server of the target application.

2. The method according to claim 1, wherein
prior to sending the service authorization request for the target application to the service authorization server, the method further comprises:
sending an identity authorization request to an identity authorization server, wherein the identity authorization request carries identity authorization authentication information provided by the terminal device, the identity authorization authentication information is used by the identity authorization server for performing identity authorization verification, and in response to that the identity authorization verification is passed, an identity authorization certificate is configured for the terminal device, and an identity authorization verification factor is configured for an access gateway node of the terminal device, wherein the identity authorization verification factor is used for performing identity authorization credibility verification on the identity authorization certificate;
wherein the service authorization request further carries the identity authorization certificate provided by the terminal device, wherein the terminal device sends the service authorization request to the service authorization server by means of the access gateway node of the terminal device and/or a service gateway node of the target application, the identity authorization certificate is used by the access gateway node and/or the service gateway node for performing identity authorization credibility verification on the access gateway node based on the identity authorization verification factor, and the service authorization request is forwarded to the service authorization server in response to that the identity authorization credibility verification is passed.

3. A service access method, applied to a service authorization server, comprising:
receiving a service authorization request for a target application sent by a terminal device;
determining, according to a local access regulation and control policy configured for the target application, whether to allow the terminal device to perform service access on the target application; and
configuring, in a case that the terminal device is allowed to perform the service access on the target application, a service authorization certificate and a time limit of the service authorization certificate for the terminal device, such that the terminal device sends a service access request for the target application to a routing node, wherein the service access request carries the service authorization certificate and the time limit, and the service authorization certificate and the time limit are used by the routing node for performing service authorization credibility verification, and in response to that the service authorization credibility verification is passed, the service access request is forwarded to an application server of the target application .

4. The method according to claim 3, wherein
the terminal device sends the service authorization request to a service gateway node by means of the routing node, and then the service gateway node forwards the service authorization request to the service authorization server;
wherein the service authorization request carries a service identification provided by the terminal device and a service authorization verification factor provided by the routing node, the service authorization verification factor is generated based on a local key, and a source IP of the service authorization request after the routing node receives the service authorization request, and after receiving the service authorization request, the service gateway node determines a service IP based on the service identification in the service authorization request and updates the service authorization verification factor in the service authorization request based on the service IP; or the service authorization request carries a service IP provided by the terminal device and a service authorization verification factor provided by the routing node, and the service authorization verification factor is generated based on a local key, a source IP of the service authorization request and the service IP in the service authorization request after the routing node receives the service authorization request; and
configuring the service authorization certificate for the terminal device comprises:
configuring, based on the service authorization verification factor in the service authorization request, the service authorization certificate for the terminal device.

5. The method according to claim 4, wherein
the service authorization request carries the service identification provided by the terminal device and the service authorization verification factor provided by the routing node, the service authorization verification factor is generated based on the local key, and the source IP of the service authorization request after the routing node receives the service authorization request, and after receiving the service authorization request, the service gateway node determines the service IP based on the service identification in the service authorization request and adds the service IP into the service authorization request; or the service authorization request carries the service IP provided by the terminal device and the service authorization verification factor provided by the routing node, and the service authorization verification factor is generated based on the local key, and the source IP of the service authorization request after the routing node receives the service authorization request; and
configuring the service authorization certificate for the terminal device comprises:
configuring, based on the service IP and the service authorization verification factor in the service authorization request, the service authorization certificate for the terminal device.

6. The method according to claim 4, wherein
the service authorization verification factor provided by the routing node is generated after the routing node receives the service authorization request, and the service authorization request further carries generation time of the service authorization verification factor provided by the routing node; and
configuring the time limit for the terminal device comprises:
configuring, based on the generation time in the service authorization request, the time limit for the terminal device, wherein the service authorization certificate is further configured based on the time limit.

7. A service access method, applied to a routing node, comprising:
receiving a service access request sent by a terminal device, wherein the service access request carries a service authorization certificate and a time limit of the service authorization certificate, and the service authorization certificate and the time limit are configured by a service authorization server for the terminal device;
performing, based on the service authorization certificate and the time limit in the service access request, service authorization credibility verification; and
forwarding, in a case that the service authorization credibility verification is passed, the service access request to an application server of a target application, such that the application server establishes a service connection for the terminal device.

8. The method according to claim 7, wherein
prior to receiving the service access request sent by the terminal device, the method further comprises:
receiving a service authorization request sent by the terminal device; and
generating, based on a local key and a source IP of the service authorization request, a service authorization verification factor, and adding the service authorization verification factor and corresponding generation time into the service authorization request so as to be sent to a service gateway node of the target application, so that the service authorization request is sent to the service authorization server by the service gateway node of the target application;
wherein the service authorization request carries a service identification provided by the terminal device, prior to the service authorization request is forwarded to the service authorization server, the service gateway node determines a service IP based on the service identification in the service authorization request, and updates the service authorization verification factor in the service authorization request based on the service IP, and the service authorization server configures a service authorization certificate for the terminal device based on the updated service authorization verification factor in the service authorization request and configures the time limit for the terminal device based on the generation time in the service authorization request; or
the service authorization request carries a service IP provided by the terminal device, and the service authorization server updates the service authorization verification factor in the service authorization request based on the service IP in the service authorization request, configures the service authorization certificate for the terminal device based on the updated service authorization verification factor and configures the time limit for the terminal device based on the generation time in the service authorization request.

9. The method according to claim 8, wherein
a preset indication field is set in the service authorization request, and the preset indication field is used for indicating whether the service authorization request is already forwarded through another routing node during a process of being sent to the service authorization server; and
adding the service authorization verification factor and the corresponding generation time into the service authorization request so as to be sent to the service gateway node of the target application comprises:
determining, according to the preset indication field of the service authorization request, whether the service authorization request is already forwarded by another routing node; and
adding, in response to that the service authorization request is already forwarded by another routing node, the generated service authorization verification factor into the service authorization request so as to be sent to the service gateway node of the target application; or
setting, in response to the service authorization request is not already forwarded by another routing node, a preset indication field of the service access request as a field value used for indicating that the service access request is already forwarded by another routing node, and adding the service authorization verification factor and the corresponding generation time into the service authorization request so as to be sent to the service gateway node of the target application.

10. The method according to claim 7, wherein
performing, based on the service authorization certificate and the time limit in the service access request, the service authorization credibility verification comprises:
generating, based on a local service authorization verification factor and the time limit in the service access request, a reference service authorization certificate, and comparing the reference service authorization certificate with the service authorization certificate in the service access request, so as to complete the service authorization credibility verification.

11. A terminal device, comprising:
a request sending module, configured to send a service authorization request for a target application to a service authorization server, wherein the service authorization server determines, according to a local access regulation and control policy configured for the target application, whether to allow the terminal device to perform service access on the target application, and in response to that the terminal device is allowed to perform the service access on the target application, the service authorization server configures a service authorization certificate and a time limit of the service authorization certificate for the terminal device ;
a response receiving module, configured to receive a service authorization response, wherein the service authorization response carries the service authorization certificate and the time limit of the service authorization certificate which are configured by the service authorization server; and
an access initiating module, configured to send a service access request for the target application to a routing node, wherein the service access request carries the service authorization certificate and the time limit, and the service authorization certificate and the time limit are used by the routing node for performing service authorization credibility verification, and in response to that the service authorization credibility verification is passed, the service access request is forwarded to an application server of the target application.

12. A service authorization server, comprising:
an authorization request receiving module, configured to receive a service authorization request for a target application sent by a terminal device;
an authorization request decision module, configured to determine whether to allow the terminal device to perform service access on the target application according to an access regulation and control policy and a current resource state for the target application; and
an authorization request performing module, configured to configure a service authorization certificate and a time limit of the service authorization certificate for the terminal device in a case that the terminal device is allowed to perform the service access on the target application, such that the terminal device sends a service access request for the target application to a routing node, wherein the service access request carries the service authorization certificate and the time limit, and the service authorization certificate and the time limit are used by the routing node for performing service authorization credibility verification, and in response to that the service authorization credibility verification is passed, the service access request is forwarded to an application server of the target application.

13. A routing node, comprising:
an access receiving module, configured to receive a service access request sent by a terminal device, wherein the service access request carries a service authorization certificate and a time limit of the service authorization certificate, and the service authorization certificate and the time limit are configured by a service authorization server for the terminal device;
an authorization verification module, configured to perform service authorization credibility verification based on the service authorization certificate and the time limit in the service access request; and
an access processing module, configured to forward the service access request to an application server of a target application in a case that the service authorization credibility verification is passed, such that the application server establishes a service connection for the terminal device.
